# EUROPEAN PATENT SPECIFICATION

(11) **EP 1 386 089 B1**
(45) Date of publication and mention of the grant of the patent: **07.06.2006**
(21) Application number: 01971155.5
(22) Date of filing: 12.09.2001
(51) Int. Cl.: F16B 37/12

(54) **TOLERANCE COMPENSATING MOUNTING DEVICE**
BEFESTIGUNGSVORRICHTUNG MIT SPIELAUSGLEICH
DISPOSITIF DE MONTAGE AVEC COMPENSATION DE LA TOLERANCE

(30) Priority: 23.04.2001 US 840265
(43) Date of publication of application: 04.02.2004
(73) Proprietor: The Gates Corporation, Denver, CO 80202 (US)
(72) Inventor: STONE, Roger, Brighton, East Sussex BN2 1EH (GB); KNIGHT, Brian Russell, Shoreham-by-Sea, West Sussex BN43 5HZ (GB)
(74) Representative: Tunstall, Christopher Stephen
(86) International application number: PCT/US2001/029134
(87) International publication number: WO 2002/086338

(56) References cited:
- EP-A- 0 023 404
- CH-A- 353 647
- DE-C- 4 110 664

## Description

### Field of the Invention

The invention relates to a fastening device, and more particularly, to a tolerance compensating mounting device used to connect components while compensating for a fit tolerance between the components.

### Background of the Invention

Assembly of equipment components can be adversely affected by tolerances, that is, dimensional differences between components that may result in gaps at fastening points. They cannot always be eliminated, but only allowed for in the assembled device. Tolerances can also "stack" when more than two components are joined at a particular location, creating a significant dimensional deviation or gap.

Tolerances may be very small, fractions of a millimeter, or very large, several millimeters, depending upon the circumstances. Larger tolerances generally reduce manufacturing costs.

Attempts have been made in the prior art to eliminate tolerances or to compensate for them in an assembled device. These generally comprise shims or screw type devices that fill the gap between the mating surfaces of the components to be joined. The shims or screw type devices are generally a separate component from the fasteners.

Also representative of the prior art is US patent 5,501,122 to Leicht et al. which discloses a twin cone device for aligning holes in components to be joined. The device comprises a set of conical structures joined by a bolt.

The prior art does not solve the problem of compensating for tolerances between planar mounting surfaces while simultaneously joining the components in a properly torqued or clamped manner; all without inducing undesirable stresses in the components. Nor does the prior art allow a component having non-coplanar connecting surfaces to be properly joined. Nor does the prior art provide a fastener that automatically compensates for a tolerance gap or clearance between mounting surfaces as part of the assembly process.

EP 0 023 404 discloses a tubular insert with a threaded exterior and an incomplete threaded interior. Rotation of an insert driver tool completes the threads on the interior portion of the insert.

What is needed is a device that completely spans a clearance or tolerance gap between components to be joined using a threaded bushing while simultaneously connecting the components. What is needed is a device that completely spans a tolerance gap between components to be joined using a threaded fastener. What is needed is a device that automatically compensates for a tolerance gap during installation. The present invention meets these needs.

### Summary of the Invention

The primary aspect of the invention is to provide a tolerance compensating mounting device that completely compensates for a tolerance gap or assembly clearance between components to be joined using a threaded bushing while simultaneously connecting the components.

Another aspect of the invention is to provide a tolerance compensating mounting device that completely compensates for a tolerance gap between components to be joined using a threaded fastener.

Other aspects of the invention will be pointed out or made obvious by the following description of the invention and the accompanying drawings.

The present invention provides a device comprising:
a fastener having a threaded portion and a shank; and
a substantially cylindrical body having a thread on an external surface and describing an internal bore for receiving the fastener, the bore parallel to a major axis, the bore having a diameter which is greater than the diameters of the threaded portion and the shank of the fastener, the bore having a surface feature on a portion thereof, the surface feature having a diameter less than the diameter of the shank of the fastener and whereby the surface feature engages the fastener, the surface feature comprising a sacrificial thread whereby upon insertion of the fastener into the bore an interference engagement is realised with the fastener threaded portion, and upon further insertion of the fastener into the bore the sacrificial thread is deformed by the fastener shank, the body having a first surface extending substantially perpendicularly to a major axis at one end thereof.

In use, the body may be threaded into a part to be mounted to a surface. The fastener is then threaded into the bore using the internal threads. The internal threads cause an interference fit between the fastener shank and the threads, temporarily preventing further insertion of the fastener. The fastener is then turned, thereby turning the body and causing the body to unscrew from the part toward the mounting surface until the body bears upon the mounting surface, thereby completely compensating for a tolerance gap. As the body is turned further, the sacrificial internal threads are stripped to allow the fastener to be fully torqued into the mounting surface hole, thereby simultaneously connecting the components while compensating for a tolerance gap.

### Brief Description of the Drawings

The accompanying drawings, which are incorporated in and form a part of the specification, illustrate preferred embodiments of the present invention, and together with a description, serve to explain the principles of the invention.

Fig. 1 is a cross-section view of the tolerance compensating device.

Fig. 2 is a plan view at line 2-2 in Fig. 1.

Fig. 3 is a plan view at line 3-3 in Fig. 1.

Fig. 4 is a side cross-section view of the inventive device.

Fig. 5 is a side cross-section view of the inventive device.

Fig. 6 is a plan view at line 6-6 in Fig. 5.

Fig. 7 is a cross-section view of an alternate embodiment.

Fig. 8 depicts a third alternate embodiment of the invention.

Fig. 9 is a plan view along line 9-9 in Fig. 8.

### Detailed Description of the Preferred Embodiment

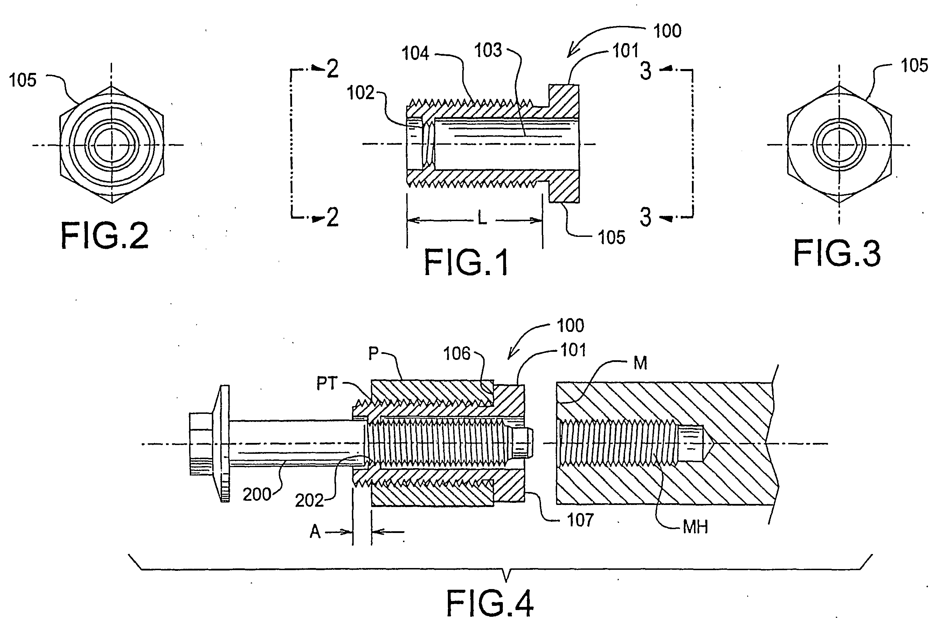

Fig. 1 is a cross-section view of the tolerance compensating mounting device. The inventive device 100 comprises bushing 101. Bushing 101 is substantially cylindrical. Bushing 101 having a surface feature 102 comprising a thread. Surface feature 102 may comprise raised potions of the surface for engaging a fastener as described herein. In the preferred embodiment surface feature comprises thread 102.

Thread 102 comprises approximately two pitches of any thread form known in the art. Bushing 101 also comprises bore or hole 103 that runs the length of bushing 101 along a major axis. Bolt 200 engages bushing 101 through hole 103. Bolt 200, see Fig. 4, engages threads 102. An internal minor diameter of threads 102 is less than an internal diameter of hole 103 such that threads 102 may engage a bolt without bolt 200 engaging a surface of hole 103.

Bushing 101 comprises a metallic material on the preferred embodiment. However, one can appreciate that it may also comprise a non-metallic material, for example a composite, ceramic or plastic, for use in situations where a non-conductive insulator is required between joined parts, or in the case where a low-torque application is required.

Bushing 101 also comprises an external surface having external threads 104. Threads 104 extend along a length L of an outer surface of bushing 101.

Bushing 101 further comprises symmetric flats 105 that are parallel to a major axis allowing use of a wrench or fingers to install the tool, see Fig. 2 and Fig. 3. The flats are of a shape similar to that of a nut or bolt head, known in the art. The flats may also be replaced with a knurled surface or plain cylinder surface to allow the bushing to be turned by hand, i.e., finger.

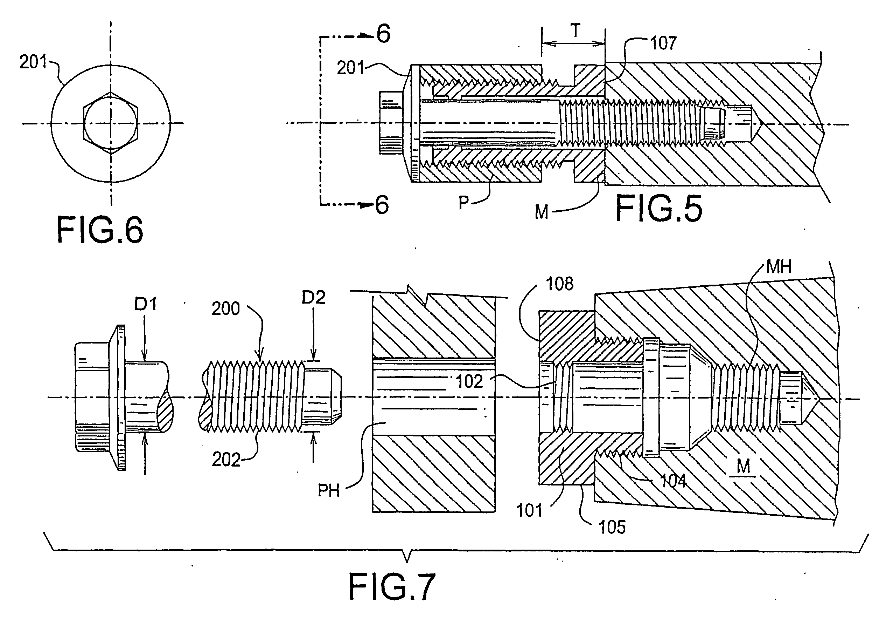

Referring to Fig. 4, the device 100, without bolt 200, is first threaded into part P. Threads 104 engage threads FT in part P. In the preferred embodiment, bushing 101 is threaded into the part P until surface 106 engages part P. One can appreciate that surface 106 need not actually touch part P, but engagement is a good indication that bushing 101 is fully inserted into part P. It is also preferable that bushing 101 partially extend length A beyond part P when it is fully inserted, assuring engagement of a maximum number of threads 104 with part P. Bolt 200 is then threaded into hole 103 until a bolt shank or an end of bolt threads 202 engage threads 102. A diameter D1 of the shank is greater than a diameter D2 of threads 202, see Fig. 7. This results in an interference fit between bolt 200 and threads 102, temporarily preventing further insertion of bolt 200 into bushing 101.

Part P is then aligned with mounting surface M such that bolt 200 lines up with hole MH.

Referring to Fig. 5, bolt 200 is then turned, which has the effect of unscrewing bushing 101 from part P due to the interference between the bolt 200 and threads 102. Bushing 101 is turned with bolt 200 until surface 107 engages mounting surface M. A further low torque is then applied to bolt 200 sufficient to distort, strip or destroy threads 102. One skilled in the art can appreciate from this description that threads 102 are relatively "soft" and as such are sacrificial in order to provide a means of turning bushing 101 with bolt 200 until the bushing seats against a mounting surface. A similar result could also be obtained by an adhesive, a short interference length or a polymeric insert, all in the hole 103 and all of which would temporarily grip the shank of the bolt allowing bushing 101 to be turned with bolt 200.

A further embodiment may comprise a variation of thread 102 where one thread is slightly distorted so that the thread is slightly "stiff" causing a frictional engagment with the bolt threads 202.

One can also appreciate that the threads on bolt 200 which engage threads 102 partially or fully deform or strip once bushing 101 is seated on the mounting surface, because the upper portion of the bolt threads are not expected to engage the threads in mouting hole MH.

In an alternate embodiment, diameter D1 of bolt 200, see Fig. 7, may extend only a limited distance up the shank from threads 202. As before, threads 102 are stripped by the wider portion of the shank. As the bolt is threaded into the mounting surface the reduced diameter portion of the bolt shank prevents a further torqued inducing engagement between the shank and the stripped threads 102. This prevents an errant torque from being registered as the bolt is fully torqued into the mounting surface.

The application of a torque to the bolt 200 to strip the threads 102 also has the effect of placing a preload on part P. This feature of the invention has the benefit of stiffening the part and overall assembly. The magnitude of the preload can be adjusted according to the torque required to strip threads 102.

Once bushing surface 107 engages mounting surface M, a torque is applied to the bolt, causing sacrificial threads 102 to fail. Bolt 200 is then fully threaded into threaded hole MH in mounting surface M until bolt flange 201 engages a bearing surface of part P. Bolt 200 may then be torqued to an appropriate torque value depending upon the application. As one can see, the tolerance gap has been automatically and completely spanned with the bushing.

Fig. 6 is a plan view of the fastener along line 6-6 in Fig. 5. Flange 201 is shown. Flange 201 may be of any width desired by a user.

As can be seen in Fig. 4 and Fig. 5, a significant tolerance T can be spanned using the inventive device while simultaneously mounting a fixture to a mounting surface. The device allows a firm, properly torqued bolted joint to be realized without putting undesirable bending (or other distorting loads) into the clamped component or fixture.

The inventive tool can be used to eliminate the effect of tolerance stacks (or, indeed, to allow the use of wide tolerances) in a number of instances, for example, in the case where a large clearance is needed to allow easy assembly of a component while fully compensating for the tolerance. The inventive device can also be used to compensate for tolerances when bolting between faces in different planes as well as bolting to faces at odd angles to a primary surface mounting surface.

Also note that the inventive device can be "inverted" in an alternate embodiment. Fig. 7 is a cross-section view of an alternate embodiment. Instead of being screwed into the part to be bolted down, it is instead screwed into the mounting surface hole using threads 104. In this case external threads 104 are left-handed. As an alternative, a frictional fitting, not shown but put in place of threads 102, is inserted into hole 103 to frictionally grip bolt 200, so that as the bolt is turned, the bushing unscrews or backs-out of the mouting surface to take up the tolerance clearance until the bushing engages the part. The frictional fitting embodiment imparts a minimal torque requiremnt which is easily realised as the bolt is further torqued into the mounting surface once the bushing is seated.

Once bushing 101 and part P are seated against surface 108, threads 102 are stripped as described above and bolt 200 is then completely torqued down.

In yet another alternate embodiment, threads 102 extend along the length of bore 103 and are not sacrificial. Threads 102 are the opposite hand from the threads 104. In this embodiment, bushing 101 if first threaded into mounting hole MH using left-hand threads 104. Bolt 200 is then inserted through a hole PH in part P and into bore 103. In this embodiment, part P has no threads in the hole, not does bolt 200 threadably engage the mounting surface hole. As the bushing 101 is unscrewed from the mounting surface M by turning action of bolt 200, bushing surface 108 comes into engagement with part P. Bolt 200 is then fully screwed into bushing 101. The left-hand thread 104 engages mouting hole MH while bolt 200 is fully torqued in place. One can appreciate that it is desireable that a minimum number of full threads engage the hole MH to develop the full strength of the connection, as known in the art of threaded connections.

One skilled in the art can also appreciate that the bushing 101 can be rotated by hand or by means of a tool or wrench using flats 105, either for installing it into a part or turning it to compensate for a tolerance clearance T.

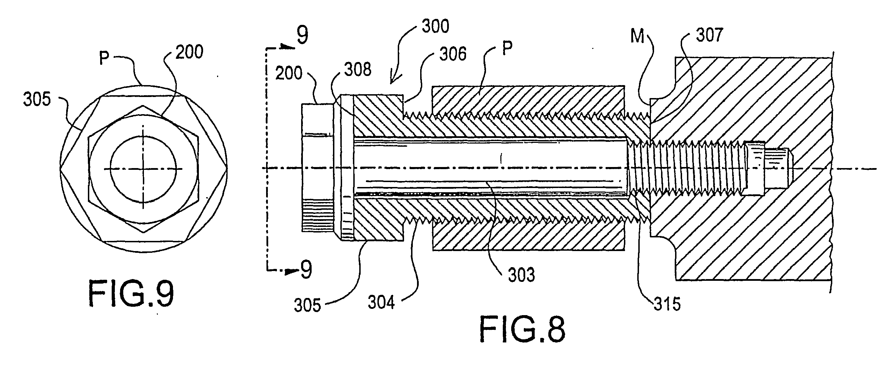

Fig. 8 depicts a third alternate embodiment of the invention. Bushing 300 comprises a substantially cylindrical shape having a bore or hole 303 running along a major axis of bushing 300. External threads 304 extend along an outside surface of bushing 300. In this embodiment, threads 304 are right-handed. Flats or knurled surface 305 provided for manually engaging or threading the bushing comprise one end of the device. Bolt 200 engages the bushing through the hole 303. In use, component P is placed in its substantially final assembled position relative the mounting surface M. Bushing 300, with bolt 200 inserted in hole 303, is then threaded into component P using threads 315 until surface 307 engages mounting surface M. Bushing 300 may be turned manually, or, by sacrificial threads 315, or other frictional insert to engage bolt 200 thereby allowing bolt 200 to turn bushing 300 as described for the other embodiments. Once bushing surface 307 engages mounting surface M, threads 310 are stripped by further turning of bolt 200 and bolt 200 is then fully threaded into mounting surface M. Bolt 200 is fully torqued once a head of bolt 200 is fully engaged with bushing surface 308.

Fig. 9 is a plan view along line 9-9 in Fig. 8. Flats 305 for engaging a tool or the like are shown.

Although a form of the invention has been described herein, it will be obvious to those skilled in the art that variations may be made in the construction and relation of parts without departing from the spirit and scope of the invention described herein.

## Claims

1. A device (100) comprising:
a fastener (200) having a threaded portion and a shank; and
a substantially cylindrical body having a thread (104) on an external surface and describing an internal bore (103) for receiving the fastener (200), the bore (103) parallel to a major axis, the bore (103) having a diameter which is greater than the diameters (D1, D2) of the threaded portion and the shank of the fastener (200), the bore (103) having a surface feature (102) on a portion thereof, the surface feature (102) having a diameter less than the diameter (D1) of the shank of the fastener (200) and whereby the surface feature (102) engages the fastener (200), the surface feature (102) comprising a sacrificial thread whereby upon insertion of the fastener (200) into the bore (103) an interference engagement is realised with the fastener threaded portion, and upon further insertion of the fastener (200) into the bore (103) the sacrificial thread is deformed by the fastener shank,
the body having a first surface (107) extending substantially perpendicularly to a major axis at one end thereof.

2. The device as in claim 1, wherein:
the threaded fastener (102) is engageable with a mounting surface hole (MH).

3. The device as in claim 1, wherein the threaded fastener (200) has a second surface extending perpendicular to a fastener major axis.

4. The device as in claim 3, wherein the body further comprises symmetrically arranged engagement surfaces (105) parallel to a major axis for turning the body.

5. The device as in claim 1, wherein:
the external thread (104) is opposite hand from the thread (102) on the internal bore surface.

6. The device as in claim 5, wherein:
the external thread (104) comprise left-hand threads.

7. The device as in claim 1, wherein the body comprises a metallic material.

8. The device as in claim 1, wherein the body comprises a non-metallic material.

## Patentansprüche

1. Vorrichtung (100) mit:
einem Befestigungsteil (200), das einen Gewindeabschnitt und einen Schaft aufweist; und
einem im Wesentlichen zylindrischen Körper, der ein Gewinde (104) an einer Außenfläche aufweist und in dem eine Innenbohrung (103) zur Aufnahme des Befestigungsteils (200) ausgebildet ist, wobei die Bohrung (103) parallel zu einer Hauptachse verläuft, die Bohrung (103) einen Durchmesser hat, der größer ist als die Durchmesser (D1,D2) des Gewindeabschnitts und des Schafts des Befestigungsteils (200), ein Teil der Bohrung (103) mit einem Oberflächenmerkmal (102) versehen ist, das Oberflächenmerkmal (102) einen Durchmesser hat, der kleiner ist als der Durchmesser (D1) des Schafts des Befestigungsteils (200), wodurch das Oberflächenmerkmal (102) mit dem Befestigungsteil (200) zusammengreift, und das Oberflächenmerkmal (102) ein Opfergewinde aufweist, wodurch beim Einführen des Befestigungsteils (200) in die Bohrung (103) ein Pass-Sitz mit dem Gewindeabschnitt des Befestigungsteils realisiert wird und beim weiteren Einführen des Befestigungsteils (200) in die Bohrung (103) das Opfergewinde durch den Schaft des Befestigungsteils verformt wird,
wobei der Körper eine erste Fläche (107) aufweist, die an ihrem einen Ende im Wesentlichen rechtwinklig zu einer Hauptachse verläuft.

2. Vorrichtung nach Anspruch 1, bei der:
das mit Gewinde versehene Befestigungsteil (200) mit einem Befestigungsflächen-Loch (MH) in Eingriff bringbar ist.

3. Vorrichtung nach Anspruch 1, bei der das mit Gewinde versehene Befestigungsteil (200) eine zweite Fläche aufweist, die rechtwinklig zu einer Befestigungsteil-Hauptachse verläuft.

4. Vorrichtung nach Anspruch 3, bei der der Körper ferner symmetrisch angeordnete Eingriffsflächen (105) aufweist, die parallel zu einer Hauptachse zum Drehen des Körpers verlaufen.

5. Vorrichtung nach Anspruch 1, bei der:
das Außengewinde (104) gegensinnig zu dem an der Innenbohrungsfläche ausgebildeten Gewinde (102) ist.

6. Vorrichtung nach Anspruch 5, bei der:
das Außengewinde (104) linksgängige Gewindegänge aufweist.

7. Vorrichtung nach Anspruch 1, bei der der Körper ein Metallmaterial aufweist.

8. Vorrichtung nach Anspruch 1, bei der der Körper ein nichtmetallisches Material aufweist.

## Revendications

1. Dispositif (100), comprenant :
un dispositif de fixation (200) comportant une partie filetée et une tige ; et
un corps sensiblement cylindrique comportant un filetage (104) sur une surface extérieure et décrivant un alésage intérieur (103) destiné à recevoir le dispositif de fixation (200), l'alésage (103) étant parallèle à un axe majeur, l'alésage (103) ayant un diamètre qui est plus grand que les diamètres (D1, D2) de la partie filetée et de la tige du dispositif de fixation (200), l'alésage (103) possédant une particularité superficielle (102) sur une partie de celui-ci, la particularité superficielle (102) ayant un diamètre inférieur au diamètre (D1) de la tige du dispositif de fixation (200) et ce par quoi la particularité superficielle (102) engage le dispositif de fixation (200), la particularité superficielle (102) comprenant un filetage sacrificiel grâce auquel, lors de l'introduction du dispositif de fixation (200) dans l'alésage (103), on obtient un engagement d'ajustement serré avec la partie filetée de dispositif de fixation et, lors d'une introduction plus avant du dispositif de fixation (200) dans l'alésage (103), le filetage sacrificiel est déformé par la tige de dispositif de fixation, le corps comportant une première surface (107) s'étendant sensiblement perpendiculairement à un axe majeur à une extrémité de celui-ci.

2. Dispositif selon la revendication 1, dans lequel :
le dispositif de fixation fileté (102) peut s'engager avec un trou (MH) de surface de montage.

3. Dispositif selon la revendication 1, dans lequel le dispositif de fixation fileté (200) comporte une seconde surface s'étendant perpendiculairement à un axe majeur de dispositif de fixation.

4. Dispositif selon la revendication 3, dans lequel le corps comprend en outre des surfaces agencées symétriquement (105) d'engagement, parallèles à un axe majeur, prévues pour rotation du corps.

5. Dispositif selon la revendication 1, dans lequel :
le filetage extérieur (104) a un pas opposé au filetage (102) sur la surface intérieure d'alésage.

6. Dispositif selon la revendication 5, dans lequel :
le filetage extérieur (104) comprend un filetage à pas à gauche.

7. Dispositif selon la revendication 1, dans lequel le corps comprend un matériau métallique.

8. Dispositif selon la revendication 1, dans lequel le corps comprend un matériau non métallique.
